(19) **Europäisches Patentamt European Patent Office Office européen des brevets**

(11) **EP 2 926 019 B1**

(12) **FASCICULE DE BREVET EUROPEEN**

(45) Date de publication et mention de la délivrance du brevet:
**07.09.2016 Bulletin 2016/36**

(21) Numéro de dépôt: **13803109.1**

(22) Date de dépôt: **05.11.2013**

(51) Int Cl.:
**F16D 48/06** *(2006.01)*

(86) Numéro de dépôt international:
**PCT/FR2013/052632**

(87) Numéro de publication internationale:
**WO 2014/083253 (05.06.2014 Gazette 2014/23)**

(54) **PROCÉDÉ ET DISPOSITIF D'ADAPTATION DE LA CARACTÉRISTIQUE NOMINALE D'UN COUPLE TRANSMIS PAR UN EMBRAYAGE EN FONCTION D'ÉCARTS DE COUPLE ESTIMÉS**

VERFAHREN UND VORRICHTUNG ZUR ANPASSUNG DER NOMINALEN EIGENSCHAFT EINES VON EINER KUPPLUNG ALS FUNKTION GESCHÄTZTER DREHMOMENTUNTERSCHIEDE ÜBERTRAGENEN DREHMOMENTS

METHOD AND DEVICE FOR ADAPTING THE NOMINAL CHARACTERISTIC OF A TORQUE TRANSMITTED BY A CLUTCH AS A FUNCTION OF ESTIMATED TORQUE DIFFERENCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2012 FR 1261345**

(43) Date de publication de la demande:
**07.10.2015 Bulletin 2015/41**

(73) Titulaire: **Peugeot Citroën Automobiles SA 78140 Vélizy Villacoublay (FR)**

(72) Inventeurs:
• **LAUNAY, Cedric**
  **78680 Epone (FR)**
• **LE COZ, Rowan**
  **4608 Warsage (BE)**
• **ROCQ, Gaetan**
  **78125 La Boissiere Ecole (FR)**

(56) Documents cités:
  **EP-A1- 2 194 287     EP-A2- 1 411 262**

## Description

L'invention concerne le contrôle du couple qui est transmis par un embrayage à une boîte de vitesses robotisée.

EP 1 411 262 A2 qui est considéré comme l'état de la technique le plus proche de l'objet de la revendication 1, divulgue un procédé d'adaptation d'une courbe nominale d'évolution d'un couple nominal transmis par un embrayage en fonction d'une position nominale d'un actionneur dudit embrayage.

On entend ici par « boîte de vitesses robotisée » une boîte de vitesses dont le fonctionnement est contrôlé par un calculateur ou superviseur. Il pourra donc s'agir, notamment, d'une boîte de vitesses automatique, d'une boîte de vitesses manuelle pilotée, ou d'une boîte de vitesses à double embrayage (ou DCT), et plus généralement de toute boîte associée à un système de couplage de type embrayage à friction sec ou humide.

Dans certains domaines, comme par exemple celui des véhicules, éventuellement de type automobile, la qualité des changements de vitesse (ou rapport) de la boîte de vitesses (robotisée), et de la mise en mouvement du véhicule dépend principalement de la précision du contrôle du couple qui est transmis par l'embrayage à l'arbre primaire de la boîte de vitesses. Pour que ce contrôle de couple transmis soit précis, la fonction de transfert (ou caractéristique d'embrayage ou encore courbe d'évolution), entre la position de l'actionneur de l'embrayage et le couple transmis à l'arbre primaire de la boîte de vitesses, doit être la plus réaliste possible.

Hélas, comme le sait l'homme de l'art, cette fonction de transfert varie au cours du temps, notamment en fonction des conditions d'usure de l'embrayage et des conditions thermiques en cours de l'embrayage et de son actionneur. A titre d'exemple, dans le cas d'une boîte de vitesses à double embrayage, un mauvais pilotage du couple transmis par l'embrayage peut au minimum induire une dégradation de l'agrément de conduite lors des changements de rapport et dans le pire des cas provoquer un blocage des roues du véhicule.

La fonction de transfert (ou caractéristique d'embrayage ou encore courbe d'évolution) servant de référence lors de la génération de la consigne de position de l'actionneur d'embrayage (conversion couple/position), il est donc important de l'adapter régulièrement, afin d'optimiser la qualité des changements de vitesse et les éventuels décollages du véhicule, et d'assurer une prestation relativement constante pendant le roulage et d'une manière générale pendant toute la vie du véhicule.

Plusieurs solutions d'adaptation ont été proposées, notamment dans le document brevet FR 2887606. Cependant ces solutions présentent l'un au moins des inconvénients listés ci-après :

- l'utilisation d'un référentiel à axe de position normé pour décrire la caractéristique d'embrayage nécessite de transformer les données des fabricants en position absolue (en mm),

- la forme strictement monotone et le gradient monotone de la caractéristique d'embrayage n'étant pas garantis, l'inversion de la caractéristique d'embrayage pour déterminer la consigne de position en fonction du couple transmis ne peut pas être directe, et donc on est contraint d'effectuer une boucle de régulation pour converger vers la consigne de position finale,

- l'absence de correction prédictive impose une forte adaptation pour compenser les effets thermiques, ce qui est préjudiciable à l'initialisation de la caractéristique d'embrayage à froid après un apprentissage dans des conditions thermiques chaudes.

L'invention a donc pour but d'améliorer la situation.

Elle propose notamment à cet effet un procédé, destiné à adapter la courbe nominale d'évolution d'un couple nominal transmis par un embrayage en fonction d'une position nominale d'un actionneur de cet embrayage, et comprenant :

- une étape (i) dans laquelle on assimile la position nominale à la somme d'une position courante mesurée, appartenant à une courbe courante couple mesuré/position mesurée associée à un premier repère, et d'un terme correctif choisi, puis on définit une position nominale recalée égale à la position nominale diminuée de la valeur d'une position de référence de la courbe nominale dans le premier repère,
- une étape (ii) dans laquelle on détermine pour au moins une position nominale recalée choisie un écart de couple entre un couple observé et un couple transmissible estimé et corrigé, fonction d'un coefficient de correction et d'un couple transmissible estimé, lui-même fonction d'une valeur d'un coefficient de transformation et de première et seconde courbes extrémales nominales correspondant respectivement à des valeurs minimale et maximale du coefficient de transformation, et
- une étape (iii) dans laquelle on détermine pour chaque position nominale recalée choisie à l'étape (ii), dans une courbe nominale recalée construite à partir des couples nominaux de la courbe nominale associés aux positions nominales recalées, un couple nominal correspondant afin de l'adapter en fonction de l'écart de couple déterminé correspondant pour obtenir un couple nominal adapté, et on adapte la courbe d'évolution nominale recalée en fonction de chaque couple nominal adapté pour obtenir une courbe d'évolution nominale adaptée.

Ainsi, l'inversion de la caractéristique d'embrayage nominale (ou courbe nominale d'évolution) pour déterminer une consigne de position en fonction du couple à transmettre requis peut se faire directement, sans boucle de régulation.

Le procédé selon l'invention peut comporter d'autres caractéristiques qui peuvent être prises séparément ou en combinaison, et notamment :

- la position de référence peut être la position nominale de l'actionneur qui correspond au point de léchage (ou « kiss point ») de l'embrayage ;
- à l'étape (ii) on peut déterminer, d'une part, chaque couple observé en fonction d'un couple produit par un moyen de production de couple et parvenant à l'embrayage et d'un régime de fonctionnement de ce moyen de production de couple ;
  - ➢ à l'étape (ii) on peut déterminer chaque valeur du coefficient de transformation associé à un couple transmissible estimé en intégrant l'écart de couple correspondant à ce dernier et en imposant au coefficient de transformation au moins une première contrainte propre à imposer une forme monotone à la courbe nominale adaptée et/ou au moins une seconde contrainte propre à imposer un gradient monotone à la courbe nominale adaptée ;

- à l'étape (iii) chaque adaptation d'un couple nominal peut consister en une modification de la valeur du coefficient de transformation associé en fonction de l'écart de couple correspondant ;
  - ➢ à l'étape (iii) chaque couple nominal à adapter peut être associé dans un groupe de N couples à N-1 couples nominaux qui le précèdent et qui le suivent, et on peut répartir l'adaptation de chaque couple nominal à adapter sur les N couples de son groupe ;

    - • la répartition peut se faire en fonction de poids choisis associés respectivement aux N couples nominaux d'un même groupe, le poids choisi le plus fort étant associé au couple nominal à adapter à partir duquel est constitué un groupe ;

- le coefficient de transformation peut comprendre une première partie dite permanente et une seconde partie dédiée aux variations de température. Dans ce cas, la première partie est modifiée tant qu'une température mesurée dans l'embrayage demeure inférieure à un seuil choisi, et la seconde partie n'est modifiée que lorsque la température mesurée dans l'embrayage devient supérieure à ce seuil choisi ;
  - ➢ une fois la seconde partie modifiée, on peut réduire sa valeur progressivement jusqu'à une valeur nulle pendant un intervalle de temps prédéfini.

L'invention propose également un dispositif, destiné à adapter la courbe nominale d'évolution d'un couple nominal transmis par un embrayage en fonction d'une position nominale d'un actionneur de cet embrayage, et comprenant des moyens de calcul agencés :

- pour assimiler la position nominale à la somme d'une position courante mesurée, appartenant à une courbe courante couple mesuré/position mesurée associée à un premier repère, et d'un terme correctif choisi, puis pour définir une position nominale recalée égale à la position nominale diminuée de la valeur d'une position de référence de la courbe courante dans le premier repère,
- pour déterminer pour au moins une position nominale recalée choisie un écart de couple entre un couple observé et un couple transmissible estimé et corrigé, fonction d'un coefficient de correction et d'un couple transmissible estimé, lui-même fonction d'une valeur d'un coefficient de transformation et de première et seconde courbes extrémales nominales correspondant respectivement à des valeurs minimale et maximale du coefficient de transformation, et
- pour déterminer pour chaque position nominale recalée choisie, dans une courbe nominale recalée construite à partir des couples nominaux de la courbe nominale associés aux positions nominales recalées, un couple nominal correspondant afin de l'adapter en fonction de l'écart de couple déterminé correspondant pour obtenir un couple nominal adapté, et pour adapter la courbe d'évolution nominale recalée en fonction de chaque couple nominal adapté pour obtenir une courbe d'évolution nominale adaptée.

L'invention propose également un calculateur, destiné à contrôler le fonctionnement d'un embrayage, et comprenant un dispositif d'adaptation du type de celui présenté ci-avant.

L'invention propose également un véhicule, éventuellement de type automobile, et comprenant une boîte de vitesses robotisée, un embrayage et un calculateur du type de celui présenté ci-avant. Un tel véhicule peut, par exemple, comprendre un groupe motopropulseur de type hybride ou à système de contrôle d'arrêt et de redémarrage automatique (ou « stop and start »).

D'autres caractéristiques et avantages de l'invention apparaîtront à l'examen de la description détaillée ci-après, et des dessins annexés, sur lesquels :

- la figure 1 illustre schématiquement et fonctionnellement un exemple de véhicule à groupe motopropulseur à boîte de vitesses robotisée et à embrayage simple, et comportant un dispositif d'adaptation selon l'invention,
- la figure 2 illustre schématiquement au sein d'un diagramme un exemple de courbe d'évolution nominale complète (à la fermeture et à l'ouverture) d'un couple transmis par un embrayage en fonction de la position de l'actionneur de cet embrayage, dans un premier repère,
- la figure 3 illustre schématiquement au sein d'un diagramme la partie dédiée à la fermeture de la courbe d'évolution nominale de la figure 2, encadrée par deux courbes d'évolution extrémales, dans un second repère translaté par rapport au premier repère,
- la figure 4 illustre schématiquement au sein d'un diagramme la courbe d'évolution nominale translatée de la figure 3 après un premier exemple d'adaptation et les deux courbes d'évolution extrémales associées, dans le second repère, et
- la figure 5 illustre schématiquement au sein d'un diagramme la courbe d'évolution nominale translatée de la figure 3 après un second exemple d'adaptation et les deux courbes d'évolution extrémales associées, dans le second repère.

L'invention a notamment pour but de proposer un procédé d'adaptation, et un dispositif d'adaptation D associé, destinés à adapter la courbe d'évolution nominale du couple, qui est transmis par un embrayage EM à l'arbre d'entrée AE d'une boîte de vitesses robotisée BV, en fonction de la position d'un actionneur ACE de cet embrayage EM.

On considère dans ce qui suit, à titre d'exemple non limitatif, que la boîte de vitesses (robotisée) BV fait partie d'un véhicule V de type automobile, comme par exemple une voiture. Mais l'invention n'est pas limitée à cette application. Elle concerne en effet tout système comprenant au moins une boîte de vitesses robotisée couplée à un embrayage. Par conséquent, l'invention concerne notamment les véhicules terrestres (voitures, motocyclettes, véhicules utilitaires, cars (ou bus), camions, engins de voirie, engins de chantier, engins de manutention, trains), les véhicules fluviaux ou maritimes, les aéronefs, certains bâtiments (publics ou privés), et certaines installations industrielles (publiques ou privées).

De plus, on considère dans ce qui suit, à titre d'exemple non limitatif, que le véhicule V comprend un groupe motopropulseur (ou GMP) de type conventionnel, c'est-à-dire comprenant au moins un moyen de production de couple comme par exemple un moteur thermique MT. Mais le véhicule V pourrait être de type hybride (dans ce cas, il comprend au moins un moteur thermique MT et au moins un moteur (ou machine) auxiliaire (éventuellement de type électrique)), ou bien comporter un système de contrôle d'arrêt et de redémarrage automatique (ou « stop and start » (ou encore STT)).

En outre, on considère dans ce qui suit, à titre d'exemple non limitatif, que la boîte de vitesses robotisée BV est une boîte de vitesses automatique. Mais l'invention n'est pas limitée à ce type de boîte de vitesses robotisée. Elle concerne en effet toute boîte de vitesses dont le fonctionnement est contrôlé par un calculateur ou superviseur, et notamment les boîtes de vitesses manuelle pilotées et les boîtes de vitesses à double embrayage (ou DCT).

Enfin, on considère dans ce qui suit, à titre d'exemple non limitatif, que les fonctionnements du moteur thermique MT, de l'embrayage EM et de la boîte de vitesses BV sont contrôlés par un même calculateur (ou superviseur) SC. Mais cela n'est pas obligatoire. Ils pourraient en effet être contrôlés par deux ou trois calculateurs pouvant communiquer entre eux, par exemple via un réseau de communication du véhicule V, éventuellement de type multiplexé.

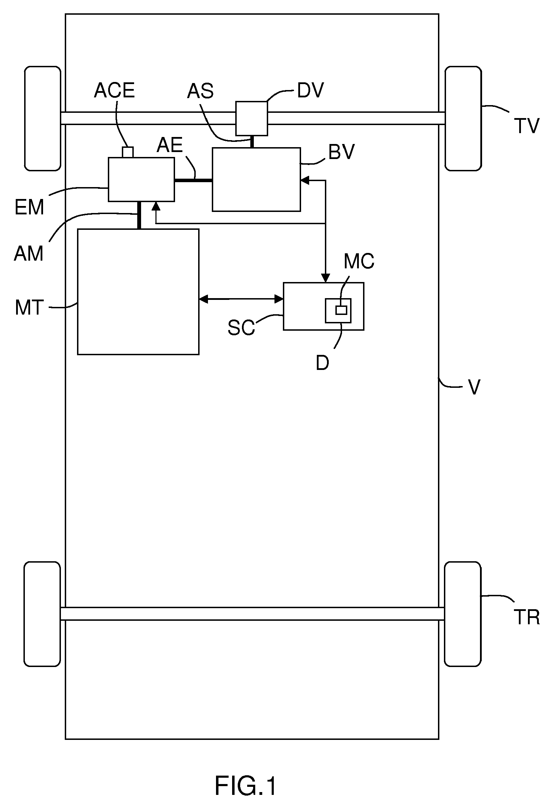

On a schématiquement illustré sur la figure 1 un exemple non limitatif d'un véhicule V à groupe motopropulseur conventionnel. Comme illustré, ce véhicule V comprend au moins un moteur thermique MT, un arbre moteur AM, une boîte de vitesses (robotisée) BV, et un embrayage EM.

Le moteur thermique MT comprend un vilebrequin (non représenté) qui est solidarisé fixement à l'arbre moteur AM afin d'entraîner ce dernier (AM) en rotation selon un régime moteur choisi.

La boîte de vitesses BV comprend classiquement un arbre d'entrée (ou primaire) AE et un arbre de sortie AS destinés à être couplés l'un à l'autre en vue de transmettre du couple. L'arbre d'entrée AE est destiné à recevoir le couple moteur via l'embrayage EM et comprend plusieurs pignons (non représentés) destinés à participer à la définition des différentes vitesses (ou rapports) sélectionnables de la boîte de vitesses BV. L'arbre de sortie AS est destiné à recevoir le couple moteur via l'arbre d'entrée AE afin de le communiquer à un train (ici le train avant TV), via un différentiel DV et éventuellement via un arbre de transmission. Cet arbre de sortie AS comprend plusieurs pignons (non représentés) destinés à engrener certains pignons de l'arbre d'entrée AE afin de participer à la définition des différentes vitesses (ou rapports) sélectionnables de la boîte de vitesses BV.

**4**

L'embrayage EM comprend notamment un volant moteur qui est solidarisé fixement à l'arbre moteur AM et un disque d'embrayage qui est solidarisé fixement à l'arbre d'entrée AE. Son fonctionnement est piloté par un actionneur ACE, qui comprend, par exemple, des électrovannes de contrôle de fourchette ou de butée concentrique (ou CSC (« Concentric Slave Cylinder ») dans le cas d'un embrayage sec ou des électrovannes de contrôle de piston dans le cas d'un embrayage humide.

L'invention propose de mettre en oeuvre, au sein, ici, du véhicule V, un procédé d'adaptation destiné à adapter la courbe d'évolution (ou caractéristique d'embrayage) nominale du couple qui est transmis par l'embrayage EM en fonction de la position de son actionneur ACE.

Cette mise en oeuvre peut se faire au moyen d'un dispositif d'adaptation D comprenant des moyens de calcul MC. Ce dernier (D) peut, comme illustré non limitativement sur la figure 1, être installé dans le calculateur SC. Mais cela n'est pas obligatoire. En effet, il pourrait être externe au calculateur SC, tout en étant couplé à ce dernier (SC). Dans ce dernier cas, il peut être lui-même agencé sous la forme d'un calculateur dédié comprenant un éventuel programme dédié, par exemple. Par conséquent, un dispositif d'adaptation D, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

Le procédé d'adaptation, selon l'invention, comprend au moins trois étapes (i) à (iii).

On considère qu'avant que ne débute une mise en oeuvre du procédé d'adaptation, le dispositif (d'adaptation) D connaît la plus récente courbe nominale d'évolution (ou caractéristique d'embrayage) $C_{T\,nom}$ du couple nominal qui est transmis par l'embrayage EM en fonction de la position nominale de son actionneur ACE.

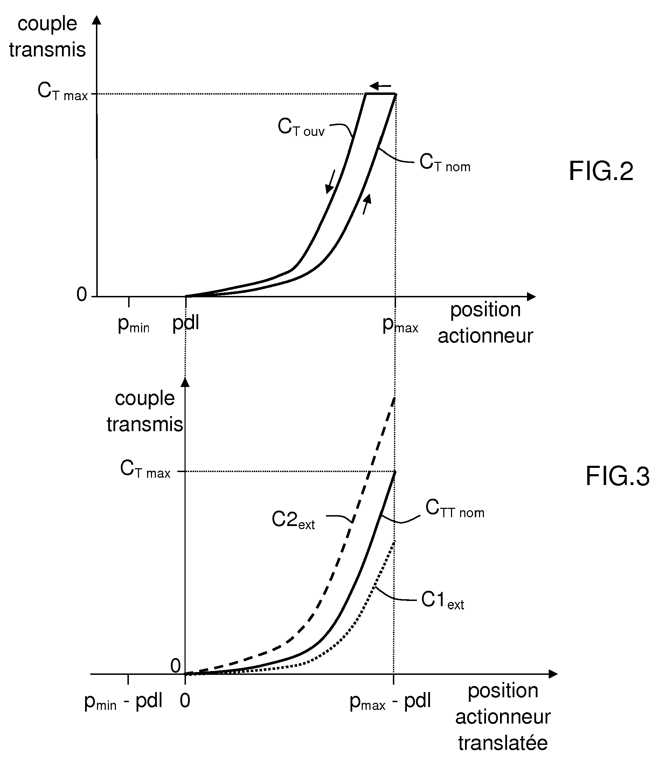

Un exemple d'une telle courbe nominale $C_{T\,nom}$ est illustré dans le diagramme de la figure 2 dans un premier repère.

Dans le diagramme illustré, la référence pdl désigne une position de référence de la courbe nominale couple/position $C_{T\,nom}$ qui constitue ce que l'homme de l'art appelle le point de léchage (ou en anglais « kiss point ») de l'embrayage EM.

Il est rappelé que le point de léchage de l'embrayage EM correspond à une position pdl de son actionneur ACE dans laquelle le volant moteur (solidarisé fixement à l'arbre moteur AM) commence à entrer en frottement avec le disque d'embrayage (solidarisé fixement à l'arbre d'entrée AE), de sorte que le couple transmis par l'embrayage EM devienne supérieur à un seuil de couple faible, par exemple égal à 3 N/m. La position pdl de ce point de léchage variant dans le temps, elle doit être déterminée régulièrement lors de phases d'apprentissage, en vue du recalage de la courbe d'évolution nominale $C_{T\,nom}$. Elle est déterminée par des moyens d'apprentissage à partir, notamment, de mesures de position de l'actionneur ACE et de mesures du régime de l'arbre d'entrée AE.

Par ailleurs, sur la figure 2, la référence $p_{min}$ désigne la position minimale (ou limite inférieure) de l'actionneur ACE qui correspond à une ouverture maximale de l'embrayage EM lorsqu'il est naturellement fermé, et la référence $p_{max}$ désigne la position maximale (ou limite supérieure) de l'actionneur ACE qui correspond à une fermeture maximale de l'embrayage EM lorsqu'il est naturellement fermé et donc à un couple transmis maximal $C_{T\,max}$.

L'étape (i), du procédé d'adaptation, comprend une phase dans laquelle on (par exemple des moyens de calcul MC du dispositif (d'adaptation) D) assimile la position nominale $p_{nom}$ à la somme d'une position courante mesurée $p_{c\,nom}$, appartenant à une courbe courante couple mesuré/position mesurée qui est associée à un premier repère (illustré sur la figure 2), et d'un terme correctif $P_{cor}$ choisi (soit $p_{nom} = p_{c\,nom} + P_{cor}$), puis on définit une position nominale recalée $p_{nom\,rec}$ qui est égale à la position nominale $p_{nom}$ diminuée de la valeur d'une position de référence $p_{ref}$ de la courbe nominale $C_{T\,nom}$ dans le premier repère (soit $p_{nom\,rec} = P_{nom} - Pref_{=} p_{c\,nom} + P_{cor} - p_{ref}$).

On notera que la seconde partie de cette étape (i) revient à translater (ou recaler) de la valeur $p_{ref}$ dans le premier repère (associé à la courbe courante) la courbe nominale $C_{T\,nom}$ qui est connue dans un repère nominal. Le dispositif D dispose alors d'une courbe nominale (ou caractéristique d'embrayage) recalée $C_{TT\,nom}$. Le résultat de cette translation est illustré dans le diagramme de la figure 3 qui est associé à un second repère translaté de la valeur $p_{ref}$ suivant l'axe des abscisses (« position actionneur ») par rapport au premier repère de la figure 2.

De préférence, et comme illustré sur la figure 3, la position de référence $p_{ref}$ est la position nominale pdl de l'actionneur ACE qui correspond au point de léchage de l'embrayage EM.

On notera que le terme correctif $P_{cor}$ regroupe tous les décalages de la courbe courante par rapport à la courbe nominale $C_{T\,nom}$, qui peuvent être prédits du fait des conditions d'utilisation en cours de l'embrayage EM. On notera que ce terme correctif $P_{cor}$ peut être appliqué sur l'ensemble de la courbe nominale $C_{T\,nom}$ ou bien uniquement dans une partie de cette dernière ($C_{T\,nom}$) selon le phénomène physique que l'on cherche à compenser de façon prédictive.

A titre d'exemple, en présence d'un phénomène d'échauffement, on peut introduire une correction thermique $P_{cor}$ constante à l'intégralité de la courbe nominale recalée $C_{TT\,nom}$, tandis qu'en présence d'un phénomène de déplacement d'arbre, on peut introduire une correction de mouvement $P_{cor}$ (constante ou variable) dans une partie choisie de la courbe nominale recalée $C_{TT\,nom}$.

L'étape (ii), du procédé d'adaptation, comprend une phase dans laquelle on détermine pour au moins une position nominale recalée $p_{nom\,rec}$ choisie un écart de couple $\varepsilon(pi)$ entre un couple observé $C_{obs}(pi)$ et un couple transmissible estimé et corrigé $C_{est\ corr}(pi)$, qui est fonction d'un coefficient de correction $\chi_{cor}$, qui est de préférence prédit, et d'un couple transmissible estimé. La référence pi désigne ici une ième position nominale recalée $p_{nom\ rec}$.

$$\text{On a donc la relation } \varepsilon(pi) = C_{obs}(pi) - C_{est\ corr}(pi).$$

On notera que le coefficient de correction $\chi_{cor}$ est un coefficient de préférence de type multiplicatif et apparenté à un changement du coefficient de frottement de la friction d'embrayage qui s'applique à tous les points pi de la courbe nominale recalée $C_{TT\ nom}$.

Chaque couple observé $C_{obs}(pi)$ peut être déterminé en fonction d'un couple $C_{MT}$ produit par le moteur (ici thermique) MT et parvenant à l'embrayage EM via l'arbre moteur AM et du régime de fonctionnement de ce moteur MT. Par exemple, on peut avoir la relation suivante :

$$C_{obs}(pi) = C_{MT} - I_{MT} * \ddot{\theta} \ ,$$

où $I_{MT}$ est l'inertie du moteur et $\theta$ est la dérivée seconde de la position angulaire (et donc l'accélération angulaire du moteur).

Par ailleurs, chaque couple transmissible estimé $C_{est}(pi)$ est déterminé en fonction d'un coefficient de transformation $\alpha_i$ et de première $C1_{ext}$ et seconde $C2_{ext}$ courbes extrémales nominales qui correspondent respectivement à des valeurs minimale et maximale du coefficient de transformation $\alpha_i$.

Les première $C1_{ext}$ et seconde $C2_{ext}$ courbes extrémales nominales servent à construire la courbe nominale recalée $C_{TT\ nom}$. Tous les points $C1_{ext}(pi)$ qui constituent la première courbe extrémale nominale $C1_{ext}$ sont associés à une même valeur minimale du coefficient de transformation $\alpha_i$, à savoir, ici, la valeur nulle (0). De même, tous les points $C2_{ext}(pi)$ qui constituent la seconde courbe extrémale nominale $C2_{ext}$ sont associés à une même valeur maximale du coefficient de transformation $\alpha_i$, à savoir, ici, la valeur un (1).

Des exemples de première $C1_{ext}$ et seconde $C2_{ext}$ courbes extrémales nominales encadrant la courbe nominale recalée $C_{TT\ nom}$ sont illustrés sur la figure 3.

Par exemple, chaque couple transmissible estimé $C_{est}(pi)$ peut être calculé au moyen de la relation suivante :

$$C_{est}(pi) = C1_{ext}(pi) + \alpha_{global}(pi) * (C2_{ext}(pi) - C1_{ext}(pi)).$$

Si l'on utilise la relation $C_{est\ cor}(pi) = C_{est}(pi)*\chi_{cor}$, alors chaque couple transmissible estimé et corrigé $C_{est\ corr}(pi)$ est donné par la relation :

$$C_{est\ cor}(pi) = (C1_{ext}(pi) + \alpha_{global}(pi) * (C2_{ext}(pi) - C1_{ext}(pi))) * \chi_{cor}.$$

On notera que le coefficient de transformation $\alpha_{global}$ est une valeur instantanée associée à un instant t à la courbe nominale recalée $C_{TT\ nom}$. Il est le résultat d'une interpolation linéaire (et non pas double ou fractionnée) entre les coefficients $\alpha_i$ qui sont définis pour chaque point discrétisé (i) de la courbe nominale recalée $C_{TT\ nom}$. En effet, cette condition permet d'effectuer au final une inversion directe de la courbe nominale adaptée pour réaliser la conversion entre une consigne de couple requise et la consigne de position de l'actionneur ACE qui lui correspond effectivement.

Par exemple, le nombre de points discrétisés définissant à chaque instant une courbe nominale recalée $C_{TT\ nom}$ peut être choisi égal à 11 (soit i = 1 à 11).

On notera également qu'il est préférable d'imposer à chaque valeur intermédiaire du coefficient de transformation $\alpha_i$ au moins une première contrainte qui est propre à imposer une forme monotone à la courbe nominale recalée $C_{TT\ nom}$ et/ou au moins une seconde contrainte qui est propre à imposer un gradient monotone à ladite courbe nominale recalée $C_{TT\ nom}$.

En effet, la forme de la courbe nominale recalée $C_{TT\ nom}$ étant définie par les valeurs de coefficient de transformation $\alpha_i$ des points pi qui la constituent, pour contraindre cette forme il suffit donc de contraindre les valeurs minimales de chacun des $\alpha_i$.

Compte tenu des relations données ci-dessus, la première contrainte sur les $\alpha_i$ peut être obtenue comme suit :

$$C_{est}(pi) = C1_{ext}(pi) + \alpha_i * (C2_{ext}(pi) - C1_{ext}(pi)),$$

$$C_{est}(pi+1) = C1_{ext}(pi+1) + \alpha_{i+1} * (C2_{ext}(pi+1) - C1_{ext}(pi+1)),$$

puis, pour obtenir la monotonie strictement croissante de la forme on écrit :

$$C_{est}(pi+1) \geq C_{est}(pi)$$

d'où :

$$\alpha_{i+1} \geq \frac{C1_{ext}(pi) - C1_{ext}(pi+1) + \alpha_i * (C2_{ext}(pi) - C1_{ext}(pi))}{(C2_{ext}(pi+1) - C1_{ext}(pi+1))}$$

Dans ce qui suit, on désigne par $\alpha_{monotonie\,i}$ la limite d'adaptation de $\alpha_i$ imposée par la contrainte relative à la forme monotone de la courbe nominale recalée $C_{TT\,nom}$.

De même, compte tenu des relations données ci-dessus, la seconde contrainte sur les $\alpha_i$ peut être obtenue comme suit :

pour obtenir la monotonie de la dérivée on a la relation :

$$C1_{ext}(pi+1) + \alpha_{i+1} * \left(C2_{ext}(pi+1) - C1_{ext}(pi+1)\right) \geq C1_{ext}(pi) + \alpha_i *$$

$$\left(C2_{ext}(pi) - C1_{ext}(pi)\right) + \Delta C_{min},$$

avec $\Delta C_{min}$ égal à la différence entre les valeurs des couples transmissibles estimés $C_{est}(pi)$ et $C_{est}(pi-1)$ des deux points précédents (pi et pi-1), d'où :

$$\alpha_{i+1\,min} \geq \frac{C1_{ext}(pi) - C1_{ext}(pi+1) + \alpha_i * (C2_{ext}(pi) - C1_{ext}(pi)) + \Delta C_{min}}{(C2_{ext}(pi+1) - C1_{ext}(pi+1))}$$

Dans ce qui suit, on désigne par $\alpha_{gradient\,monotone\,i}$ la limite d'adaptation de $\alpha_i$ imposée par la contrainte relative au gradient monotone de la courbe nominale recalée $C_{TT\,nom}$.

L'étape (iii), du procédé d'adaptation, comprend une phase dans laquelle on (les moyens de calcul MC) détermine pour chaque position nominale recalée $p_{nom\,rec}$ (= pi) choisie lors de l'étape (ii), dans la courbe nominale recalée $C_{TT\,nom}$ (construite à partir des couples nominaux de la courbe nominale $C_{T\,nom}$ qui sont associés aux positions nominales recalées $p_{nom\,rec}$ = pi), un couple nominal correspondant afin de l'adapter en fonction de l'écart de couple $\varepsilon(pi)$ déterminé correspondant pour obtenir un couple nominal adapté Cna.

Puis, l'étape (iii) se poursuit par une phase dans laquelle on (les moyens de calcul MC) adapte la courbe nominale recalée $C_{TT\,nom}$ en fonction de chaque couple nominal adapté $C_{na}$ pour obtenir une courbe d'évolution nominale adaptée $C_{TT\,ad}$.

L'adaptation d'un point (i) peut, par exemple, se faire en modifiant le coefficient de transformation $\alpha_i$ qui lui est associé en fonction de l'écart de couple $\varepsilon(pi)$ correspondant. Par exemple, cette adaptation peut se faire par intégration de l'écart de couple $\varepsilon(pi)$ selon la formule suivante :

$$\alpha i = \int \varepsilon(pi) * gi * dt,$$

où gi est un paramètre égal à 1, si pi (= $p_{nom\,rec}$) est dans la plage correspondant au point (i), ou bien égal à 0, si pi (= $p_{nom\,rec}$) n'est pas dans la plage correspondant au point (i).

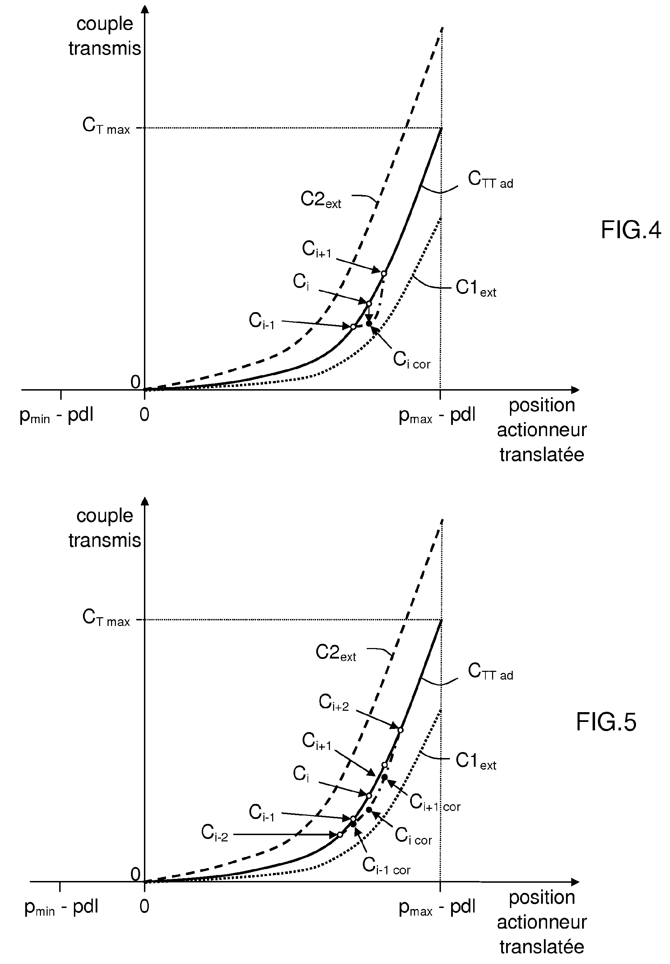

Un exemple d'adaptation ponctuelle (c'est-à-dire sur un seul point (i)) de la courbe nominale recalée $C_{TT\,nom}$ de la figure 3 est illustré sur le diagramme de la figure 4 (avec les deux courbes d'évolution extrémales nominales $C1_{ext}$ et $C2_{ext}$ associées), dans le second repère. Cette adaptation ponctuelle résulte du déplacement du point (i) (correspondant au couple $C_i$) vers le bas (suivant la flèche), du fait de la modification de son coefficient de transformation $\alpha_i$ en fonction de l'écart de couple $\varepsilon(pi)$ déterminé lors de l'étape (ii) pour ce point (i). Au final le point (i) de la courbe nominale recalée $C_{TT\,nom}$ correspond au couple corrigée $C_{i\,cor}$ de la courbe nominale adaptée $C_{TT\,ad}$. Comme on peut le constater sur la figure 4, cette adaptation ponctuelle provoque une modification de forme de la courbe nominale recalée $C_{TT\,nom}$ qui est matérialisée par la portion de ligne en tirets points.

Ce type d'adaptation ponctuelle pouvant entraîner une déformation très marquée localement de la courbe nominale recalée $C_{TT\,nom}$, on pourra lui préférer une adaptation distribuée, du type de celle qui est illustrée non limitativement sur l'exemple de la figure 5.

Dans cet exemple d'adaptation distribuée, chaque couple nominal $C_i$ à adapter est associé dans un groupe de N couples nominaux à N-1 couples $C_{i'}$ (avec i' ≠ i) qui le précèdent et qui le suivent, et on répartit la correction de chaque couple nominal $C_i$ à adapter sur les N couples nominaux de son groupe. On notera, comme illustré non limitativement sur la figure 5, que cette répartition peut se faire en fonction de poids choisis qui sont associés respectivement aux N couples nominaux d'un même groupe. Dans ce cas, le poids choisi le plus fort est de préférence associé au couple nominal $C_i$ à adapter à partir duquel est constitué un groupe.

Dans l'exemple de la figure 5, le groupe dont fait partie le couple nominal $C_i$ à adapter comprend deux autres couples nominaux, à savoir $C_{i-1}$ et $C_{i+1}$. N est donc ici égal à 3 (mais il pourrait être égal à 2 ou 4). L'amplitude de l'adaptation calculée initialement pour le point (i), et qui est fonction de l'écart de couple ε(pi), est donc ici répartie entre les coefficients de transformation $\alpha_{i-1}$, $\alpha_i$ et $\alpha_{i+i}$ respectivement des points (i-1), (i) et (i+1), selon des poids choisis. Au final, les points (i-1), (i) et (i+1) de la courbe nominale recalée $C_{TT\,nom}$ présentent respectivement les couples nominaux adaptés $C_{i-1\,cor}(pi)$, $C_{i\,cor}(pi)$ et $C_{i+1\,cor}(pi)$ dans la courbe nominale adaptée $C_{TT\,ad}$. Cette adaptation distribuée provoque une modification de forme adoucie de la courbe nominale recalée $C_{TT\,nom}$ qui est matérialisée par la portion de ligne en tirets points.

Etant donné que la courbe nominale recalée $C_{TT\,nom}$ est à chaque instant considéré utilisée pour déterminer la consigne de position qui correspond au couple à transmettre qui a été requis, lorsque des coefficients de transformation $\alpha_i$ évoluent, la consigne de position évolue en conséquence, ce qui permet d'annuler intégralement l'erreur d'estimation du couple transmis par l'embrayage EM. On obtient ainsi une espèce de boucle de régulation qui permet de converger simultanément sur l'estimation du couple transmissible et la réalisation du couple de consigne.

Certains phénomènes thermiques modifiant la caractéristique d'embrayage pendant un temps très court, comme par exemple lors d'une dissipation de puissance élevée, il pourrait s'avérer préjudiciable d'intégrer cette modification car sur le transitoire de couple suivant il faudrait adapter la caractéristique d'embrayage dans le sens inverse. Par conséquent, le coefficient de transformation $\alpha_i$ peut comprendre une première partie dite permanente $\alpha_{perm\,i}$ et une seconde partie $\alpha_{therm\,i}$ dédiée aux variations de température (soit $\alpha_i = \alpha_{perm\,i} + \alpha_{therm\,i}$). Dans ce cas, la première partie $\alpha_{perm\,i}$ peut être modifiée tant qu'une température mesurée dans l'embrayage EM demeure inférieure à un seuil choisi, et la seconde partie $\alpha_{therm\,i}$ n'est modifiée que lorsque la température mesurée dans l'embrayage EM devient supérieure au seuil choisi.

Par exemple, une fois que la seconde partie $\alpha_{therm\,i}$ a été modifiée et donc que la phase d'adaptation est désactivée, on peut réduire sa valeur progressivement jusqu'à ce qu'elle devienne nulle, pendant un intervalle de temps prédéfini.

On notera que pendant une phase d'adaptation, il est avantageux que la courbe nominale recalée $C_{TT\,nom}$ ne soit contrainte que par les $\alpha_{monotonie\,i}$ qui permettent de respecter la monotonie de sa forme, et, qu'une fois l'adaptation désactivée, la courbe nominale recalée $C_{TT\,nom}$ ne soit contrainte que par les $\alpha_{gradient\,monotone\,i}$ qui permettent de respecter la monotonie de son gradient. En effet, la contrainte relative au gradient étant très sévère, elle pourrait aboutir à une impossibilité d'adaptation de la courbe nominale recalée $C_{TT\,nom}$, et donc à une impossibilité de suivre la consigne de couple. Par conséquent, pendant une phase de glissement de l'embrayage EM, il est préférable de privilégier le respect de la consigne de couple plutôt que le respect de la forme de la courbe nominale recalée $C_{TT\,nom}$.

Compte tenu de la préférence qui précède, les coefficients de corrections αi peuvent être donnés par les relations suivantes :

$$\alpha i = max(\alpha_{perm\,i} + \alpha_{therm\,i}, \alpha_{monotonie\,i}),$$

pendant une phase d'adaptation,

$$\alpha i = max(\alpha_{perm\,i} + \alpha_{therm\,i}, \alpha_{gradient\,monotone\,i}),$$

après une phase d'adaptation.

## Revendications

1. Procédé d'adaptation d'une courbe nominale d'évolution d'un couple nominal transmis par un embrayage (EM) en fonction d'une position nominale d'un actionneur (ACE) dudit embrayage (EM), **caractérisé en ce qu'**il comprend une étape (i) dans laquelle on assimile ladite position nominale à la somme d'une position courante mesurée, appartenant à une courbe courante couple mesuré/position mesurée associée à un premier repère, et d'un terme correctif choisi, puis on définit une position nominale recalée égale à ladite position nominale diminuée d'une valeur d'une position de référence de ladite courbe nominale dans ledit premier repère, une étape (ii) dans laquelle on détermine pour au moins une position nominale recalée choisie un écart de couple entre un couple observé et un couple transmissible estimé et corrigé, fonction d'un coefficient de correction et d'un couple transmissible estimé, lui-même fonction d'une valeur d'un coefficient de transformation et de première et seconde courbes extrémales nominales correspondant respectivement à des valeurs minimale et maximale dudit coefficient de transformation, et une étape (iii) dans laquelle on détermine pour chaque position nominale recalée choisie à l'étape (ii), dans une courbe nominale recalée construite à partir des couples nominaux de ladite courbe nominale associés auxdites positions nominales recalées, un couple nominal correspondant afin de l'adapter en fonction de l'écart de couple déterminé correspondant pour obtenir un couple nominal adapté, et on adapte ladite courbe d'évolution nominale recalée en fonction de chaque couple nominal adapté pour obtenir une courbe d'évolution nominale adaptée.

2. Procédé selon la revendication 1, **caractérisé en ce que** ladite position de référence est la position nominale dudit actionneur qui correspond à un point de léchage dudit embrayage (EM).

3. Procédé selon l'une des revendications 1 et 2, **caractérisé en ce qu'**à l'étape (ii) on détermine chaque couple observé en fonction d'un couple produit par un moyen de production de couple (MT) et parvenant audit embrayage (EM) et d'un régime de fonctionnement dudit moyen de production de couple (MT).

4. Procédé selon la revendication 3, **caractérisé en ce qu'**à l'étape (ii) on détermine chaque valeur du coefficient de transformation associé à un couple transmissible estimé en intégrant l'écart de couple correspondant à ce dernier et en imposant audit coefficient de transformation au moins une première contrainte propre à imposer une forme monotone à ladite courbe nominale adaptée et/ou au moins une seconde contrainte propre à imposer un gradient monotone à ladite courbe d'évolution nominale adaptée.

5. Procédé selon l'une des revendications 3 et 4, **caractérisé en ce qu'**à l'étape (iii) chaque adaptation d'un couple nominal consiste en une modification de la valeur dudit coefficient de transformation associé en fonction dudit écart de couple correspondant.

6. Procédé selon la revendication 5, **caractérisé en ce qu'**à l'étape (iii) chaque couple nominal à adapter est associé dans un groupe de N couples à N-1 couples nominaux qui le précèdent et qui le suivent, et on répartit ladite adaptation de chaque couple nominal à adapter sur lesdits N couples de son groupe.

7. Procédé selon la revendication 6, **caractérisé en ce que** ladite répartition se fait en fonction de poids choisis associés respectivement auxdits N couples nominaux d'un même groupe, le poids choisi le plus fort étant associé au couple nominal à adapter à partir duquel est constitué un groupe.

8. Procédé selon l'une des revendications 3 à 7, **caractérisé en ce que** ledit coefficient de transformation comprend une première partie dite permanente et une seconde partie dédiée aux variations de température, ladite première partie étant modifiée tant qu'une température mesurée dans ledit embrayage (EM) demeure inférieure à un seuil choisi, et ladite seconde partie n'étant modifiée que lorsque la température mesurée dans ledit embrayage (EM) devient supérieure audit seuil choisi.

9. Procédé selon la revendication 8, **caractérisé en ce qu'**une fois ladite seconde partie modifiée, on réduit sa valeur progressivement jusqu'à une valeur nulle pendant un intervalle de temps prédéfini.

10. Dispositif (D) d'adaptation courbe nominale d'évolution d'un couple nominal transmis par un embrayage (EM) en fonction d'une position nominale d'un actionneur dudit embrayage (EM), **caractérisé en ce qu'**il comprend des moyens de calcul (MC) agencés i) pour assimiler ladite position nominale à la somme d'une position courante mesurée, appartenant à une courbe courante couple mesuré/position mesurée associée à un premier repère, et d'un terme correctif choisi, puis pour définir une position nominale recalée égale à ladite position nominale diminuée d'une valeur d'une position de référence de ladite courbe nominale dans ledit premier repère, (ii) pour déterminer pour au moins une position nominale recalée choisie un écart de couple entre un couple observé et un couple transmissible estimé et corrigé, fonction d'un coefficient de correction et d'un couple transmissible estimé, lui-même fonction d'une valeur d'un coefficient de transformation et de première et seconde courbes extrémales nominales correspondant respectivement à des valeurs minimale et maximale dudit coefficient de transformation, et (iii) pour déterminer pour chaque position nominale recalée choisie, dans une courbe nominale recalée construite à partir des couples nominaux de ladite courbe nominale associés auxdites positions nominales recalées, un couple nominal correspondant afin de l'adapter en fonction de l'écart de couple déterminé correspondant pour obtenir un couple nominal adapté, et on adapte ladite courbe d'évolution nominale recalée en fonction de chaque couple nominal adapté pour obtenir une courbe d'évolution nominale adaptée.

11. Calculateur (SC) pour contrôler le fonctionnement d'un embrayage (EM), **caractérisé en ce qu'**il comprend un dispositif d'adaptation (D) selon la revendication 10.

12. Véhicule (V) comprenant une boîte de vitesses robotisée (BV) et un embrayage (EM), **caractérisé en ce qu'**il comprend en outre un calculateur (SC) selon la revendication 11.

**Patentansprüche**

1. Verfahren zum Anpassen einer nominalen Entwicklungskurve eines nominalen Drehmoments, das von einer Kupplung (EM) übertragen wird, in Abhängigkeit von einer nominalen Position eines Stellglieds (ACE) der Kupplung (EM), **dadurch gekennzeichnet, dass** es einen Schritt (i) umfasst, bei dem man die nominale Position mit der Summe einer gemessenen aktuellen Position, die zu einer aktuellen Kurve gemessenes Drehmoment/gemessene Position gehört, die mit einer ersten Kennzeichnung assoziiert ist, und einem ausgewählten Korrekturglied assimiliert, man dann eine neu eingestellte nominale Position gleich der nominalen Position verringert, um einen Wert einer Referenzposition der nominalen Kurve in der ersten Kennzeichnung zu definieren, einen Schritt (ii), bei dem man mindestens eine ausgewählte neu eingestellte nominale Position eines Drehmomentunterschieds zwischen einem beobachteten Drehmoment und einem geschätzten und in Abhängigkeit von einem Korrekturkoeffizienten korrigierten übertragbaren Drehmoment und einem geschätzten übertragbaren Drehmoment bestimmt, das selbst von einem Wert eines Umwandlungskoeffizienten und ersten und zweiten nominalen Endkurven, die jeweils Mindest- und Höchstwerten des Umwandlungskoeffizienten entsprechen, und einen Schritt (iii), bei dem man für jede bei Schritt (ii) ausgewählte neu eingestellte nominale Position in einer neu eingestellten nominalen Kurve, die ausgehend von nominalen Drehmomenten der nominalen Kurve aufgebaut ist, die mit den neu eingestellten nominalen Positionen assoziiert sind, ein entsprechendes nominales Drehmoment bestimmt, um es in Abhängigkeit von dem bestimmten entsprechenden Drehmoment anzupassen, um ein angepasstes nominales Drehmoment zu erhalten, und man die nominale Entwicklungskurve, die in Abhängigkeit von jedem angepassten nominalen Drehmoment neu eingestellt ist, anpasst, um eine angepasste nominale Entwicklungskurve zu erhalten.

2. Verfahren nach Anspruch 1, **dadurch gekennzeichnet, dass** die Referenzposition die nominale Position des Stellglieds ist, die einem Leckpunkt der Kupplung (EM) entspricht.

3. Verfahren nach einem der Ansprüche 1 und 2, **dadurch gekennzeichnet, dass** man bei dem Schritt (ii) jedes beobachtete Drehmoment in Abhängigkeit von einem Drehmoment, das von einem Drehmomentproduktionsmittel (MT) erzeugt wird und zu der Kupplung (EM) gelangt, und einer Betriebsdrehzahl des Drehmomentproduktionsmittels (MT) bestimmt.

4. Verfahren nach Anspruch 3, **dadurch gekennzeichnet, dass** man bei Schritt (ii) jeden Wert des Umwandlungskoeffizienten, der mit einem geschätzten übertragbaren Drehmoment assoziiert ist, bestimmt, indem man den Drehmomentunterschied, der diesem Letzteren entspricht, integriert und dem Umwandlungskoeffizienten mindestens eine erste Auflage auferlegt, die geeignet ist, der angepassten nominalen Kurve eine monotone Form aufzuerlegen, und/oder mindestens eine zweite Auflage, die geeignet ist, der angepassten nominalen Entwicklungskurve einen monotonen Gradienten aufzuerlegen.

5. Verfahren nach einem der Ansprüche 3 und 4, **dadurch gekennzeichnet, dass** bei Schritt (iii) jede Anpassung eines nominalen Drehmoments in einer Modifizierung des Werts des Umwandlungskoeffizienten, der in Abhängigkeit von dem entsprechenden Drehmomentunterschied assoziiert ist, besteht.

6. Verfahren nach Anspruch 5, **dadurch gekennzeichnet, dass** bei Schritt (iii) jedes anzupassende nominale Drehmoment in einer Gruppe von N Drehmomenten mit N-1 nominalen Drehmomenten, die ihm vorangehen und ihm folgen, assoziiert ist, und man die Anpassung jedes anzupassenden nominalen Drehmoments auf die N Drehmomente seiner Gruppe verteilt.

7. Verfahren nach Anspruch 6, **dadurch gekennzeichnet, dass** die Verteilung in Abhängigkeit von ausgewählten Gewichten, die jeweils mit den N nominalen Drehmomenten einer selben Gruppe assoziiert sind, erfolgt, wobei das stärkste ausgewählte Gewicht mit dem anzupassenden nominalen Drehmoment assoziiert ist, von dem ausgehend eine Gruppe gebildet wird.

8. Verfahren nach einem der Ansprüche 3 bis 7, **dadurch gekennzeichnet, dass** der Umwandlungskoeffizient einen ersten Teil, permanenter Teil genannt, und einen zweiten Teil, der den Temperaturvariationen gewidmet ist, umfasst, wobei der erste Teil solange modifiziert wird, wie eine in der Kupplung (EM) gemessene Temperatur niedriger bleibt als ein ausgewählter Schwellenwert, und der zweite Teil nur modifiziert wird, wenn die in der Kupplung (EM) gemessene Temperatur höher wird als der ausgewählte Schwellenwert.

9. Verfahren nach Anspruch 8, **dadurch gekennzeichnet, dass** man, sobald der zweite Teil modifiziert ist, seinen Wert allmählich bis zu einem Wert null während eines vordefinierten Zeitintervalls verringert.

10. Vorrichtung (D) zum Anpassen einer nominalen Entwicklungskurve eines nominalen Drehmoments, das von einer Kupplung (EM) in Abhängigkeit von einer nominalen Position eines Stellglieds der Kupplung (EM) übertragen wird, **dadurch gekennzeichnet, dass** sie Rechenmittel (MC) umfasst, die eingerichtet sind, um die nominale Position mit der Summe einer gemessenen aktuellen Position zu assimilieren, die zu einer aktuellen Kurve gemessenes Drehmoment/gemessene Position gehört, die mit einer ersten Kennzeichnung assoziiert ist, und ein ausgewähltes Korrekturglied, dann zum Definieren einer neu eingestellten nominalen Position gleich der nominalen Position verringert um einen Wert einer Referenzposition der nominalen Kurve in der ersten Kennzeichnung, (ii) um für mindestens eine ausgewählte neu eingestellte nominale Position einen Drehmomentunterschied zwischen einem beobachteten Drehmoment und einem geschätzten und in Abhängigkeit von einem Korrekturkoeffizienten korrigierten übertragbaren Drehmoment und einem geschätzten übertragbaren Drehmoment zu bestimmen, das selbst von einem Wert eines Umwandlungskoeffizienten und einer ersten und zweiten nominalen Endkurve abhängt, die jeweils Mindest- und Höchstwerten des Umwandlungskoeffizienten entspricht, und (iii) für jede ausgewählte neu eingestellte nominale Position in einer neu eingestellten nominalen Kurve, die ausgehend von den nominalen Drehmomenten der nominalen Kurve aufgebaut ist, die mit den neu eingestellten nominalen Positionen assoziiert sind, ein entsprechendes nominales Drehmoment zu bestimmen, um es in Abhängigkeit von dem entsprechenden bestimmten Drehmomentunterschied anzupassen, um ein angepasstes nominales Drehmoment zu erhalten, und man die neu eingestellte nominale Entwicklungskurve in Abhängigkeit von jedem angepassten nominalen Drehmoment anpasst, um eine angepasste nominale Entwicklungskurve zu erhalten.

11. Rechner (SC) zum Steuern des Funktionierens einer Kupplung (EM), **dadurch gekennzeichnet, dass** er eine Anpassungsvorrichtung (D) nach Anspruch 10 umfasst.

12. Fahrzeug (V), das ein robotisiertes Schaltgetriebe (BV) und eine Kupplung (EM) umfasst, **dadurch gekennzeichnet dass** es außerdem einen Rechner (SC) nach Anspruch 11 umfasst.

**Claims**

1. A method for adapting a nominal development curve of a nominal torque transmitted by a clutch (EM) as a function of a nominal position of an actuator (ACE) of said clutch (EM), **characterized in that** it includes a step (i) in which said nominal position is assimilated to the sum of a measured current position, belonging to a measured torque current curve/measured position associated with a first point of reference, and a selected corrective term, then a readjusted nominal position is defined, equal to said nominal position reduced by a value of a reference position of said nominal curve in said first reference point, a step (ii) in which there is determined, for at least one selected readjusted nominal position, a torque difference between an observed torque and an estimated and corrected transmissible torque, a function of a correction coefficient and of an estimated transmissible torque, itself a function of a value of a transformation coefficient and of first and second nominal extreme curves corresponding respectively to minimum and maximum values of said transformation coefficient, and a step (iii) in which there is determined for each readjusted nominal position selected in step (ii), in a readjusted nominal curve constructed from nominal torques of said nominal curve associated with said readjusted nominal positions, a corresponding nominal torque so that it can be adapted as a function of the corresponding determined torque difference in order to obtain an adapted nominal torque, and said readjusted nominal development curve is adapted as a function of each adapted nominal torque in order to obtain an adapted nominal development curve.

2. The method according to Claim 1, **characterized in that** said reference position is the nominal position of said actuator which corresponds to a biting point of said clutch (EM).

3. The method according to one of Claims 1 and 2, **characterized in that** at step (ii) each observed torque is determined as a function of a torque produced by a torque production means (MT) and arriving at said clutch (EM) and of an operating rate of said torque production means (MT).

4. The method according to Claim 3, **characterized in that** at step (ii) each value of the transformation coefficient associated with an estimated transmissible torque is determined by integrating the torque difference corresponding to the latter and by imposing on said transformation coefficient at least a first constraint suitable for imposing an uninterrupted form to said adapted nominal curve and/or at least a second constraint suitable for imposing an uninterrupted gradient to said adapted nominal development curve.

5. The method according to one of Claims 3 and 4, **characterized in that** at step (iii) each adaptation of a nominal torque consists of a modification of the value of said associated transformation coefficient as a function of said corresponding torque difference.

6. The method according to Claim 5, **characterized in that** at step (iii) each nominal torque to be adapted is associated in a group of N torques to N-1 nominal torques which precede it and which follow it, and said adaptation of each nominal torque to be adapted is distributed over said N torques of its group.

7. The method according to Claim 6, **characterized in that** said distribution is carried out as a function of selected weights associated respectively to said N nominal torques of a same group, the greatest selected weight being associated with the nominal torque to be adapted from which a group is constituted.

8. The method according to one of Claims 3 to 7, **characterized in that** said transformation coefficient includes a first part, designated permanent, and a second part dedicated to the temperature variations, said first part being modified as long as a measured temperature in said clutch (EM) remains less than a selected threshold, and said second part only being modified when the measured temperature in said clutch (EM) becomes greater then said selected threshold.

9. The method according to Claim 8, **characterized in that** once said second part is modified, its value is reduced progressively down to a zero value during a predefined time interval.

10. A device (D) for adapting a nominal development curve of a nominal torque transmitted by a clutch (EM) as a function of a nominal position of an actuator of said clutch (EM), **characterized in that** it includes calculation means (MC) arranged (i) to assimilate said nominal position to the sum of a measured current position, belonging to a measured torque current curve/measured position associated with a first point of reference, and a selected corrective term, then to define a readjusted nominal position equal to said nominal position reduced by a value of a reference position of said nominal curve in said first reference point, (ii) to determine, for at least one selected readjusted nominal position, a torque difference between an observed torque and an estimated and corrected transmissible torque, a function of a correction coefficient and of an estimated transmissible torque, itself a function of a value of a transformation coefficient and of first and second nominal extreme curves corresponding respectively to minimum and maximum values of said transformation coefficient, and (iii) to determine for each selected readjusted nominal position, in a readjusted nominal curve constructed from nominal curves of said nominal curve associated with said readjusted nominal positions, a corresponding nominal torque so as to adapt it as a function of the corresponding determined torque difference in order to obtain an adapted nominal torque, and said readjusted nominal development curve is adapted as a function of each adapted nominal torque in order to obtain an adapted nominal development curve.

11. A computer (SC) to control the functioning of a clutch (EM), **characterized in that** it includes an adaptation device (D) according to Claim 10.

12. A vehicle (V) including an automated gearbox (BV) and a clutch (EM), **characterized in that** it further includes a computer (SC) according to Claim 11.

FIG.1

couple
transmis

$C_{T\,max}$

$C_{T\,ouv}$

$C_{T\,nom}$

FIG.2

0

$p_{min}$     pdl                              $p_{max}$

position
actionneur

couple
transmis

$C_{T\,max}$

FIG.3

$C2_{ext}$          $C_{TT\,nom}$

$C1_{ext}$

0

$p_{min}$ - pdl   0                       $p_{max}$ - pdl

position
actionneur
translatée

FIG.4

FIG.5

**EP 2 926 019 B1**

**RÉFÉRENCES CITÉES DANS LA DESCRIPTION**

**Documents brevets cités dans la description**

- EP 1411262 A2
- FR 2887606